Europäisches Patentamt

European Patent Office

Office européen des brevets

(11) Numéro de publication: **0 284 528**
**A1**

## (12) DEMANDE DE BREVET EUROPEEN

(21) Numéro de dépôt: 88420090.8

(22) Date de dépôt: 16.03.88

(51) Int. Cl.⁴: **F 02 M 31/16**

(30) Priorité: 17.03.87 FR 8704183

(43) Date de publication de la demande:
28.09.88 Bulletin 88/39

(84) Etats contractants désignés:
AT BE CH DE ES GB GR IT LI LU NL SE

(71) Demandeur: **Penedo, José**
**10 rue des Tilleuls**
**F-54730 Gorcy (FR)**

(72) Inventeur: **Penedo, José**
**10 rue des Tilleuls**
**F-54730 Gorcy (FR)**

(74) Mandataire: **Wind, Jacques et al**
**Cabinet Germain et Maureau BP 3011**
**F-69392 Lyon Cédex 03 (FR)**

(54) Dispositif d'alimentation en carburant d'un moteur à combustion, en particulier d'un moteur diesel.

(57) Dispositif d'alimentation en carburant d'un moteur à combustion, en particulier d'alimentation en gas-oil d'un moteur diesel.

Il est équipé d'un réservoir (8) isolé, fermé par un couvercle, et dans lequel passe un échangeur (11). Dans cet échangeur passe de l'eau de réchauffage. Une sonde (14) mesure la température du gas-oil et agit sur un thermostat (13).

FIG.1

EP 0 284 528 A1

## Description

### DISPOSITIF D'ALIMENTATION EN CARBURANT D'UN MOTEUR A COMBUSTION, EN PARTICULIER D'UN MOTEUR DIESEL

La présente invention a pour objet un dispositif d'alimentation en carburant d'un moteur à combustion, en particulier d'alimentation en gas-oil d'un moteur diesel.

Par grands froids, il arrive souvent que le gas-oil gèle partiellement dans le réservoir des véhicules à moteur diesel, de sorte que la mise en route du moteur est impossible. Il a été jusqu'à présent proposé des dispositifs de réchauffage du carburant qui circule, lorsque le moteur tourne, à l'extérieur du réservoir, mais ces dispositifs connus ne permettent pas de réchauffer, de manière indépendante de toute source d'énergie extérieure au véhicule, le gas-oil se trouvant à l'intérieur du réservoir, aussi bien après le démarrage du moteur qu'avant ce démarrage.

Par ailleurs, lorsque la température est simplement basse, c'est-à-dire inférieure à zéro degré, le gas-oil contenu dans le réservoir risque de créer un dépôt de paraffine préjudiciable au bon fonctionnement du moteur.

L'invention vise à remédier à ces inconvénients en évitant que le carburant contenu dans le réservoir ne descende, quelle que soit la température extérieure, en dessous d'une température prédéterminée. En outre, l'invention vise à optimiser le rendement du moteur tout en réduisant sa consommation, en régulant, lorsque le moteur fonctionne, la température du carburant qui se trouve dans le réservoir. Ces résultats sont obtenus par le fait que ce dispositif d'alimentation en carburant est équipé d'un réservoir de carburant contenant un échangeur parcouru par un fluide de réchauffage qui circule en circuit fermé et qui est commandé, de manière régulée, par l'intermédiaire d'une sonde de température plongeant dans le carburant contenu dans le réservoir.

L'invention se rapporte également à un réservoir de carburant pour un tel dispositif, ce réservoir étant totalement revêtu d'une isolation thermique et étant fermé par un couvercle amovible livrant accès à l'échangeur de façon à pouvoir retirer celui-ci.

De toute façon, l'invention sera bien comprise, et ses avantages et autres caractéristiques ressortiront, au cours de la description suivante d'un exemple non limitatif de réalisation, en référence aux dessins schématiques annexés dans lesquels :

Figure 1 est un schéma de ce dispositif d'alimentation en carburant, implanté sur un véhicule automobile à moteur diesel ;

Figure 2 est une vue en coupe longitudinale du réservoir équipant ce dispositif ;

Figure 3 est une courbe de fonctionnement du dispositif, le moteur étant en marche normale.

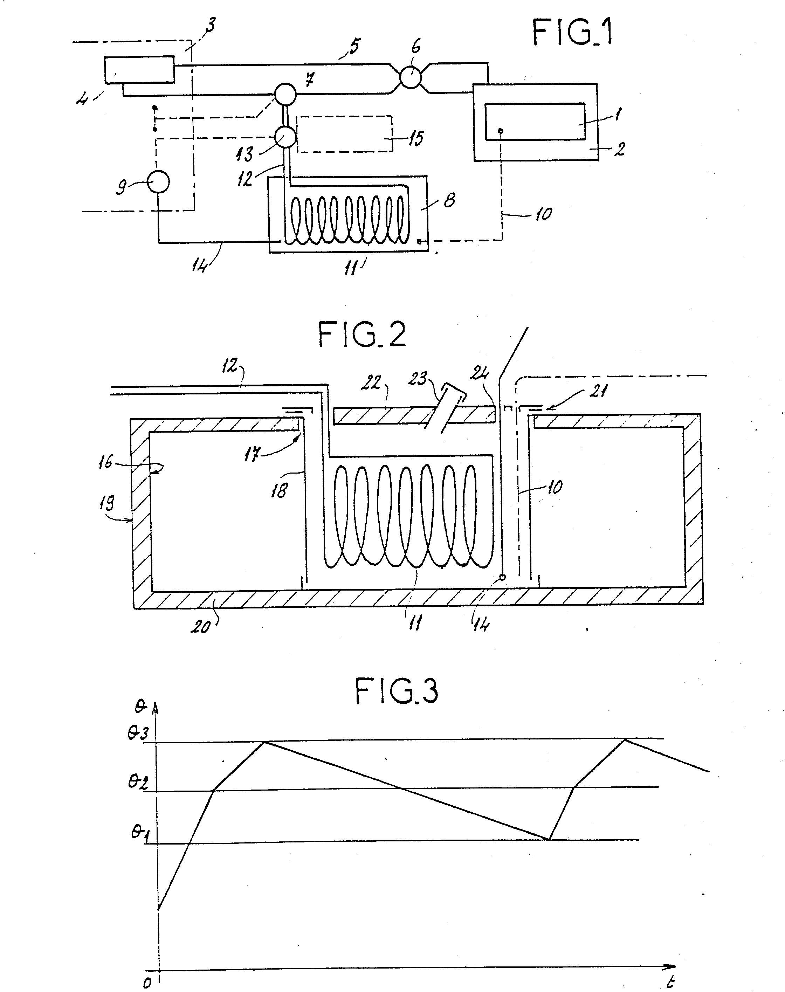

En se reportant à la figure 1, ce dispositif équipe un camion qui comporte un moteur diesel 1, avec circuit de refroidissement 2, la cabine de conduite 3 de ce camion étant équipée, de manière classique, d'un radiateur de cabine 4. Ce radiateur de cabine est alimenté par un circuit de circulation d'eau 5 qui comporte une vanne électro-thermostatique 6. Ce circuit 5 est branché en dérivation sur le circuit de refroidissement 2, et est donc alimenté par de l'eau de refroidissement du moteur. Une conduite 10 alimente en gas-oil le moteur 1 lui-même.

Conformément à l'invention, le réservoir 8 contient un échangeur constitué par un serpentin de chauffe 11, qui est parcouru par un liquide de réchauffage. Ce liquide est, dans cet exemple, constitué par de l'eau de refroidissement du moteur, les conduites 12 d'alimentation du serpentin 11 étant branchées en dérivation sur le circuit 5. Une vanne thermostatique 13 est placée sur le circuit 12, et elle est commandée au moyen d'une sonde de température 14 qui plonge dans le gas-oil du réservoir 8, et d'un dispositif d'affichage 9 de la température souhaitée, ce dispositif 9 étant situé dans la cabine 3 et comportant bien entendu un témoin lumineux de fonctionnement.

En outre, une vanne 7, commandée mauellement depuis la cabine, constitue le dispositif de sécurité permettant d'interrompre la circulation du liquide de réchauffage en cas d'anomalie de fonctionnement constatée sur le dispositif d'affichage 9.

La figure 2 montre plus en détails le réservoir 8. Il est constitué d'un corps creux 16 ayant à sa partie supérieure une ouverture 17 qui est agencée pour permettre la mise en place d'un séparateur mobile 18. Le corps 16 est doublé par une paroi métallique externe 19, et l'espace compris entre les parois 16 et 19 est rempli par un matériau thermiquement isolant 20, tel que du polyuréthane injecté.

L'ouverture supérieure 16 du réservoir est suffisamment grande pour livrer passage au serpentin de chauffe 11 qui peut donc être aisément retiré. Elle est fermée, après interposition d'un joint 21, par un couvercle métallique 22 qui comporte un orifice de remplissage incliné 23, ainsi que des passages 24 pour la sonde thermique 14, les conduites 10 d'alimentation en carburant et les conduites 12 d'alimentation en eau du serpentin 11. Ce serpentin est par exemple réalisé dans un tube de cuivre de 20 millimètres de diamètre et de un millimètre d'épaisseur ; il est enroulé sur un diamètre de 400 millimètres en formant des spires hélicoïdales jointives, et les conduites 12 sortent du réservoir pour faciliter le raccordement. Le couvercle 22 présente en outre l'avantage de permettre le nettoyage aisé du réservoir.

Le fonctionnement de ce dispositif est le suivant :

Lorsque le véhicule est à l'arrêt, il s'agit d'empêcher que le gas-oil contenu dans le réservoir 8 ne puisse descendre à une température critique. Pour cela, une isolation thermique est prévue, permettant de conserver au maximum les calories emmagasinées dans le gas-oil dont la température est d'environ 40° lors de l'arrêt du moteur.

Lorsque le véhicule est en fonctionnement, il s'agit alors de maintenir la température du gas-oil dans le réservoir 8 à une température optimale pour le rendement et la consommation du moteur, ainsi que pour un dégagement minimal de monoxyde de carbone, cette température étant par exemple de l'ordre de 40°C.

Pour ceci, on affiche sur le bouton 9 du thermostat une température θ2 comprise entre 30 et 38°. L'eau de circulation passe dans le serpentin 11 et réchauffe le gas-oil contenu dans le réservoir 8. Lorsque la sonde 14 mesure une température égale à la température affichée θ2, le circuit d'eau dans 12 est interrompu. Par inertie, due au retour de gas-oil chaud et au liquide contenu dans le serpentin, la température s'élève de quelques degrés, jusqu'à θ3, avant de redescendre lentement. Le circuit est remis en route lorsque la température du gas-oil dans le réservoir est redescendue à la température affichée moins 5°C, soit θ1. Ce fonctionnement "moteur en marche" est schématisé sur le graphique de la figure 3 qui montre la courbe de température θ du gas-oil, en degrés Celsius, en fonction du temps t.

L'invention n'est bien entendu pas limitée à l'exemple de réalisation qui vient d'être décrit. Le fluide parcourant le serpentin peut être autre que de l'eau, et peut être indépendant du circuit de circulation d'eau de refroidissement du moteur. D'autre part, lors d'arrêts prolongés fréquents du véhicule en région froide, ce fluide peut être chauffé par l'intermédiaire d'un réchauffeur 15 placé sur le circuit et commandé par la sonde 14 si la température du gas-oil descend à un niveau critique (0°C). Dans le cas de véhicules non équipés de ce réchauffeur 15, le fait que le gas-oil soit maintenu en température permet d'ajouter des additifs antifigeants dans des conditions optimales d'utilisation, même en cas d'arrêts prolongés de ces véhicules.

**Revendications**

**1** - Dispositif d'alimentation en carburant d'un moteur à combustion, en particulier d'un moteur diesel, caractérisé en ce qu'il est équipé d'un réservoir de carburant (8) qui est totalement revêtu d'une isolation thermique (20), ce réservoir (8) contenant un échangeur (11) parcouru par un fluide de réchauffage qui circule en circuit fermé et qui est commandé, de manière régulée, par l'intermédiaire d'une sonde de température (14) plongeant dans le carburant contenu dans ce réservoir (8).

**2** - Dispositif selon la revendication 1, équipant un véhicule automobile avec cabine de conduite (3), caractérisé en ce que la température de régulation du gas-oil est affichée dans la cabine (3) sur un dispositif de commande thermostatique (13) du circuit du fluide de réchauffage.

**3** - Réservoir de carburant pour dispositif selon l'une des revendications 1 et 2, caractérisé en ce qu'il est fermé par un couvercle amovible (22) livrant accès à l'échangeur (11) de manière à pouvoir retirer celui-ci.

0284528

FIG.1

FIG.2

FIG.3

Office européen
des brevets

**RAPPORT DE RECHERCHE EUROPEENNE**

Numero de la demande

EP 88 42 0090

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-U-8 523 335 (WEBER)<br>* Page 1. du chapitre: "Thermotank mit Tankeinsatz und Kraftstoffilter", alinéas 1,3; page 1, du chapitre: "Bau- und Funktionsbeschreibung des Thermotanks mit Tankeinsatz und Kraftstoffilter", alinéas 1-3; page 4, du même chapitre, les 2 derniers alinéas; page 5, du même chapitre, alinéas 1,5 *<br>--- | 1,3 | F 02 M 31/16 |
| Y | NL-A-8 006 138 (WIJNEN)<br>* Page 3, lignes 12-26; figure 1 *<br>--- | 1,3 | |
| A | US-A-4 512 324 (NEARY)<br>* Figure 5; colonne 3, lignes 1-18 *<br>--- | 2 | |
| A | US-A-3 986 486 (RABBIOSI)<br>* Figure 1; colonne 2, lignes 22-61; colonne 3, lignes 49-56 *<br>--- | 2 | |
| A | US-A-3 951 124 (FAIRBANKS)<br>* Colonne 4, lignes 12-21 *<br>--- | 2 | **DOMAINES TECHNIQUES RECHERCHES (Int. Cl.4)**<br><br>F 02 M |
| A | DE-A-3 504 629 (MIKOSOVITS)<br>* Page 4, lignes 10-20,38-39; page 5, lignes 1-8; figure 1 *<br>----- | 1 | |

Le présent rapport a été établi pour toutes les revendications

| Lieu de la recherche | Date d'achèvement de la recherche | Examinateur |
|---|---|---|
| LA HAYE | 16-06-1988 | JORIS J.C. |